# EUROPEAN PATENT SPECIFICATION

(11) **EP 4 258 654 B1**
(45) Date of publication and mention of the grant of the patent: **18.06.2025**
(21) Application number: 22167446.8
(22) Date of filing: 08.04.2022
(51) Int. Cl.: H04N 9/73

(54) **METHOD AND DEVICE FOR ACQUIRING AN IMAGE, SOFTWARE AND IMAGE SIGNAL PROCESSING DEVICE**
VERFAHREN UND VORRICHTUNG ZUR AUFNAHME EINES BILDES, SOFTWARE UND BILDSIGNALVERARBEITUNGSVORRICHTUNG
PROCÉDÉ ET DISPOSITIF POUR ACQUÉRIR UNE IMAGE, LOGICIEL ET DISPOSITIF DE TRAITEMENT DE SIGNAL D'IMAGES

(43) Date of publication of application: 11.10.2023
(73) Proprietor: Beijing Xiaomi Mobile Software Co., Ltd., Beijing 100085 (CN)
(72) Inventor: BAN, HAO, 33720 TAMPERE (FI); NIKKANEN, JARNO, 33720 TAMPERE (FI); KOTKA, JANNE, 33720 TAMPERE (FI); GAO, YUAN, 33720 TAMPERE (FI); YILMAZ, OSMAN, 33720 TAMPERE (FI)
(74) Representative: dompatent von Kreisler Selting Werner - Partnerschaft von Patent- und Rechtsanwälten mbB

(56) References cited:
- US-A1- 2020 396 434
- BIANCO SIMONE ET AL: "Single and Multiple Illuminant Estimation Using Convolutional Neural Networks", IEEE TRANSACTIONS ON IMAGE PROCESSING, IEEE, USA, vol. 26, no. 9, 1 September 2017 (2017-09-01), pages 4347 - 4362, XP011655756, ISSN: 1057-7149, [retrieved on 20170707], DOI: 10.1109/TIP.2017.2713044
- CHRISTIAN RIESS ET AL: "Illuminant color estimation for real-world mixed-illuminant scenes", 2011 IEEE INTERNATIONAL CONFERENCE ON COMPUTER VISION WORKSHOPS (ICCV WORKSHOPS), IEEE, 6 November 2011 (2011-11-06), pages 782 - 789, XP032095329, ISBN: 978-1-4673-0062-9, DOI: 10.1109/ICCVW.2011.6130332

## Description

### Field

The present invention relates to a method for acquiring an image in particular to a device for acquiring an image. Further, the present invention relates to a software and an image signal processing device implementing the method. In particular, the present invention relates to spatial white-balancing and color correction of images.

### Background

With the increased availability of devices such as terminal devices, i. e. smartphones, tablets or the like, photography with these terminals becomes more and more popular increasing the demands on image quality and appearance. Therefore, the acquired raw image undergoes several correction steps usually implemented in an image signal processor (ISP). One of these correction steps is white-balancing or color correction considering the chromaticity of the illumination in the scene and restoring the real color of the object under this illumination.

Automatic white-balancing (AWB) is a camera control algorithm that estimates the chromaticity of the illumination in the scene and has high impact on the colors and perceptual quality of the final image. Therein, current techniques have a color cast problem when image was captured under mixed illuminations. In mixed illumination cases in which there is e.g. a window or other image areas that corresponds to different illumination than the main illumination in the scene, white-balancing and color correction might lead to insufficient results. Conventional ISP and AWB support only one white point per image. This means that in mixed illumination conditions there needs to be a trade-off between multiple illuminations, and varying color casts are left in the image that will be further amplified by color space conversions and other color processing that increases color saturation. This is also the solution for all current smartphone ISPs. The single white point white balancing (also called computational color constancy) method has been extensively researched. However, for example, image regions of screens and signs are self-illuminated, and often use higher/other Correlated Color Temperatures (CCT) light sources than typical indoor illumination. Consequently, bluish color cast results on the screens and signs when a single white point is used that suits the ambient indoor illumination.

In the prior art a learning-based method exist for correction of mixed illumination using a convolutional neural network. A disadvantage of these methods is that the training data creation is an extremely labor-intensive process, which can make it unfeasible for productization in devices that must operate well anywhere in the world under uncontrolled illumination conditions.

US 2020/396434 describes a method including: obtaining an image of a scene; generating an illumination map for the obtained image; dividing the values in the illumination map to determine a number of estimated illuminant regions, wherein each region corresponds to at least one estimated illuminant present in the captured scene; estimating a white point for each region; and applying white balancing operations, based on the estimated white points for each region.

Further prior art is known from BIANCO SIMONE ET AL: "Single and Multiple Illuminant Estimation Using Convolutional Neural Networks", IEEE TRANSACTIONS ON IMAGE PROCESSING, IEEE, USA, vol. 26, no. 9, 1 September 2017 (2017-09-01), pages 4347-4362; and CHRISTIAN RIESS ET AL: "Illuminant color estimation for real-world mixed-illuminant scenes", 2011 IEEE INTERNATIONAL CONFERENCE ON COMPUTER VISION WORKSHOPS (ICCV WORKSHOPS), IEEE, 6 November 2011 (2011-11-06), pages 782-789.

### Summary

Thus, it is an object of the present invention to provide a solution for the problems of the prior art.

The problem is solved by a method for acquiring an image according to claim 1, a device according to claim 12, a computer program according to claim 13 and an image signal processor according to claim 14.

In a first aspect the present invention relates to a method for image processing, implemented in a terminal, including the steps of:
acquiring an initial image;
determining at least one region of interest (ROI) in the initial image;
determining at least one first correction parameter, for the at least one ROI and at least one second correction parameter for the initial image outside the ROI;
applying the first correction parameter to the ROI and the second correction parameter to the initial image outside the ROI to generate the final image.

In a first step an initial image is acquired. Therefore, the terminal might comprise an image sensor to directly acquire the initial image. Alternatively, the terminal might be connected via any conventional method to another device wherein the other device provides the initial image. Thus, the initial image might be stored on the other device and thus transferred via the connection to the terminal. Additionally or alternatively, the additional device may comprise an image sensor to directly acquire the initial image.

In a subsequent step at least one region of interest (ROI) is determined in the initial image. Therein, the ROI may relate to an area of changed illumination of the initial image being subject to another color of illumination or an illumination having another Correlated Color Temperature (CCT). More specific, the ROI may relate to an area of the initial image being subject to another Spectral Power Distribution (SPD). Alternatively, the ROI is determined by image recognition identifying for example objects which are usually self-illuminate such as signs, windows, displays and screens or the like. However, some of these objects which are detected could have similar CCTs or SPD as the ambient illumination.

For the at least one ROI at least one first correction parameter is determined. Further, at least one second correction parameter is determined for the initial image outside the ROI. Thus, by the first correction parameter the influence of the changed illumination inside the ROI can be corrected, wherein by the at least one second correction parameter the usual color correction or white-balancing (WB) of the initial image may be performed. Therein, the first correction parameter can be understood as spatial or local correction parameter, wherein the second correction parameter can be understood as global correction parameter.

Thus, the first correction parameter is applied to the ROI, wherein the second correction parameter is applied to the initial image outside the ROI in order to generate the final image.

Of course, before the steps of the present invention and after the steps of the present invention other steps for image correction and processing can be carried out and the initial image does not need to be the raw image for example acquired directly from an image sensor. Also, the final image might undergo further correction adjustment steps or processing steps in an image pipeline and does not need to be the image presented to the user.

By the present invention spatial white-balancing is implemented, wherein first only those areas are identified which need to be corrected and have likely an illumination deviating from the illumination of the remaining image. Thereby the first correction parameter can be determined with higher accuracy for the ROI with less computational efforts since determining of the first correction parameter is limited to the ROI. Also, the second correction parameter can be determined with higher accuracy since the image limited to the outside of the ROI is subject to the same or homogeneous illumination and thus a common second correction parameter is applicable to this area and provides sufficient results without or at least reduces color casts.

Preferably, the at least one ROI is determined by a first neural network (NN). Thus, by training of the first NN reliable detection of the ROI in the initial image can be performed. Therein, the first NN can be software implemented or hardware implemented, i.e. part of an image signal processor (ISP) or provided by a dedicated and separate processor.

Preferably, the at least one ROI is determined by object recognition in the initial image. Therein for example typical objects having a deviating illumination could be identified, such as screens or windows. The NN might be trained to detect objects which likely have a different SPD. Therein, it is noted that trained NNs usually are able to detect shapes of objects faster than their chromatic information. In particular, if the object is identified having a self-illumination, this information about the object can be used when determining the at least one first correction parameter. It is known that for example screens, signs and displays have another limited range for the possible correlated color temperature (CCT), wherein when determining the first correction parameter the range could be limited to the potential range of the CCT.

Preferably, the at least one ROI is determined by detecting an illumination transition region between the ROI and the area outside the ROI. Therein, in particular for detecting of the illumination transition region, the ROI might be segmented and the illumination might be analyzed in these segments to detect the transition region of the illumination. If an illumination transition region is detected for a specific ROI, the first correction parameter for this ROI can be determined with high accuracy wherein computational efforts are reduced due to the limited area of the ROI in the initial image. More reliable prediction of the first correction parameter is thus feasible.

Preferably, before determining the at least one ROI, the initial image is downsampled and the at least one ROI is determined in the downsampled image. Thereby computational efforts for determining the ROI are further reduced and the speed for processing the image can be increased.

Preferably, before determining the at least one ROI, the method includes: detecting mixed illumination in the initial image and if no mixed illumination is detected, determining one common correction parameter for the complete initial image.

Thus, if it is detected that the initial image has a common and generic illumination, conventional determining of the correction parameter is applied for the complete initial image. Thus, upon of the initial test for a mixed illumination in the initial image, it can be quickly determined whether identification of one or more ROIs is necessary to handle these areas individually.

Preferably, detection of the mixed illumination is performed by a second neural network. Therein, the second NN can be software implemented or hardware implemented, i.e. part of the image signal processor (ISP) or provided by a dedicated and separate processor.

Preferably, several correctional parameters are determined for the at least one ROI and the area outside. Thus, by the several correction parameters a 2D correction map might be determined to be applied for correction of the initial image. Therein, the 2D correction map might include the one or more first correction parameters for the at least one ROI as local correction parameters and the one or more second correction parameter as global correction parameters for the area outside the at least one ROI together. Therein, the number of the first correction parameter is independent from the number of the second correction parameter. Thus, one common second correction parameter as global correction parameter can be used while for the at least one ROI a plurality of local first correction parameters are used. Alternatively, one common first correction parameter can be used for the at least one ROI, while for the area outside the at least one ROI a plurality of second correction parameters are used which might be generated by interpolation. Alternatively, a plurality of local first correction parameter can be used for the at least one ROI, while for the area outside the at least one ROI a plurality of local second correction parameters are used.

Preferably, the 2D correction map is upsampled before applying to the initial image. Therein usual upsampling algorithms such as interpolation, bicubic interpolation, nearest neighbour interpolation, bilinear interpolation, bicubic spline interpolation, generalized bicubic interpolation, bilateral upscaling, or the like can be used for upsampling. Upsampling is in particular necessary if the initial image is downsampled for detecting the ROI, wherein the first correction parameter is determined for the downsampled initial image.

Preferably, a plurality of ROIs are determined in the initial image wherein for each ROI at least one first correction parameter is determined and subsequently applied. Consequently, a plurality of first correction parameters is determined wherein at least one second correction parameter is determined for the area of the initial image outside each of the ROI. Alternatively, for at least two ROIs a common correction parameter is determined. This case is applicable for example in the case that areas of changed illumination relate to the same illumination source such as a row of windows to the outside. Another reason might be that when the ROI is small, it might be difficult to get an accurate WP from the limited area of the ROI. Then, a common correction parameter might be used.

Preferably, to at least one ROI a combination of the first correction parameter and the second correction parameter is applied. Thus, by applying a combination of the first correction parameter and the second correction parameter to the at least one ROI, too sharp transitions in the final image can be avoided and a more natural appearance of the final image can be achieved. Therein, combination can be performed by averaging WP or using weighted averaging, wherein the weights are for example determined by the second NN. If it is a gradual illumination transition, a gradually changed weight might be used. Instead, an abrupt weight might be applied to the border of ROI.

According to the present invention, the first correction parameter is one or more of a white point (WP) used for white-balancing of the ROI, or a color correction value used for color correction of the ROI. Alternatively or additionally, the second correction parameter is one or more of a white point (WP) used for white-balancing of the area outside the ROI, or a color correction value used for color correction of the area outside the ROI. Therein the white point either of the ROI or the area outside the ROI may be determined by conventional white-balancing algorithms limited to the specific area of the initial image, i. e. the at least one ROI or the plurality of the ROIs individually, or the area outside the ROIs, respectively.

In a further aspect of the present invention a terminal is provided comprising an image sensor and a processor, wherein the processor is configured to perform the steps of the method described before. In particular, the terminal might be a smartphone, tablet, a camera or the like.

In a further aspect, a software is provided including instructions when executed by a computing device performing the steps of the method described before.

In a further aspect an image signal processor (ISP) is provided configured to perform the steps of the method described before. Therein, the ISP might be implemented in a terminal.

### Figure Description

In the following the present invention is described in more detail with reference to the accompanying figures.

The figures show:
- Figure 1: a flow diagram according to the present invention,
- Figure 2: a detailed diagram of the present invention,
- Figures 3A-3E: an example of the present invention,
- Figures 4A,4B: example of training data for the present invention,
- Figures 5A-5C: another example of the present invention, and
- Figure 6: a device according to the present invention.

### Detailed Description

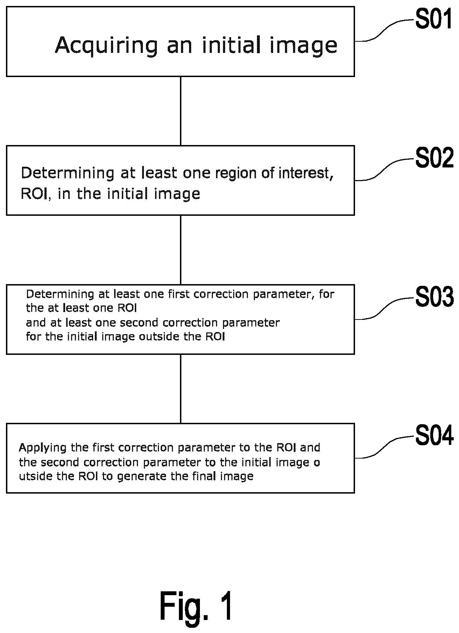

Referring to figure 1 showing a flow diagram according to the present invention. In step S01, an initial image is acquired. Therein, the initial image might be acquired by an image sensor or the terminal implementing the steps of the invention. Alternatively, the initial image might be transmitted to the terminal implementing the steps of the invention from another device. The initial image may be raw image data or a pre-processed image.

In step S02, at least one region of interest (ROI) is determined in the initial image. Therein, the ROI may relate to an area of changed illumination of the initial image being subject to another color of illumination or an illumination having another Correlated Color Temperature (CCT). More specific, the ROI may relate to an area of the initial image being subject to another Spectral Power Distribution (SPD). Alternatively, the ROI is determined by image recognition identifying for example objects which are usually self-illuminate such as signs, windows, displays and screens or the like. However, some of these objects which are detected could have similar CCTs or SPD as the ambient illumination. Thus, in the prior art, ROI would not be detected and a common correction parameter would be determined globally for complete image which would result in insufficient images and color casts.

However, in the present invention, in step S03, at least one first correction parameter for the at least one ROI and at least one second correction parameter for the initial image outside the ROI is determined. Therein, the first correction parameter can be understood as spatial or local correction parameter of the ROI and the second correction parameter can be understood as global correction parameter. Thus, the illumination change of the ROI is individually considered and allows for tailored color correction of the ROI independent from the color correction of the area outside the ROI, i.e. relating to the main illumination of the initial image. Some of sign, screens and windows which are detected by object recognition could have similar CCTs or SPD as ambient illumination. In this case, the correction parameters may not change much

In step S04, the first correction parameter is applied to the ROI and the second correction parameter is applied to the initial image outside the ROI to generate the final image.

Thereby the first correction parameter can be determined with higher accuracy for the ROI with less computational efforts since determining of the first correction parameter is limited to the ROI. Also, the second correction parameter can be determined with higher accuracy since the image limited to the outside of the ROI is subject to the same or homogeneous illumination and thus a common second correction parameter is applicable to this area and provides sufficient results without or at least reduces color casts.

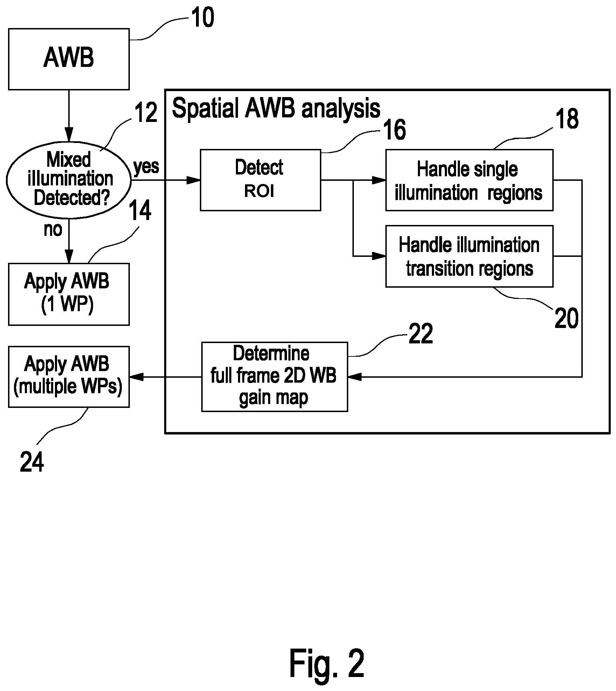

Referring to figure 2, the present invention is exemplified for the spatial automatic white-balancing (AWB). However, the present invention can also be used for color correction in general. The AWB starts at block 10. Therein, AWB might be a process in the image pipeline, preferably implemented in an image signal processor of a terminal, such as a smartphone, tablet or camera. In a subsequent block 12 it is detected whether a mixed illumination is present in the initial image. If no mixed illumination can be detected in the initial image, the conventional AWB algorithm is used in block 14, wherein for the example of AWB only one white point (WP) is applied to the complete initial image.

Detection of the mixed illumination may be performed by a neural network that has been trained. Therein, the mixed illumination detection can be implemented as a separate NN or as a part of an AI based single WP AWB algorithm (e.g. re-use the CNN feature layers and have a separate fully connected NN layers for mixed illumination classification).

If in block 12 a mixed illumination is detected, i.e. that at least two different illuminations are present in the initial image, spatial AWB analysis is started. In block 16 first one or more ROIs are detected indicating those areas in the initial image which have a deviating illumination or SPD than the remaining initial image or can be identified as objects likely to be self-illuminant such as displays, screens, signs and windows. Since in block 12 there is a detection whether a changed illumination is present in the initial image, at least one ROI is present in the initial image and detected in block 16. In block 18 it is determined that the ROI has a sharp transition region. This can be done by segmentation of the ROI and object recognition to detect the transition regions and thereby evaluating a sharp transition. If the ROI has a sharp transition, then only one WP might be determined for the ROI. Contrary in block 20, if the ROI has a gradual transition between the ROI and the remaining initial image, one or more WP are determined for the ROI, wherein the gradual transition can be provided for interpolation between different WP inside the ROI and outside the ROI. Blocks 18 and 20 are repeated for each ROI detected in the initial image. In block 22 a full 2D gain map is determined on the basis of the WP of the at least one ROI or plurality of white points for the one or more ROIs, and the remaining image. In block 24 the 2D gain map is applied to the initial image in order to white-balance the initial image and create the final image.

The present invention provides a solid solution for solving the white balance of images under mixed illuminations. It might be used prior knowledge for ROI detection, and segmentation methods for better boundary definition. And it proposed to differently deal with different illumination transitions.

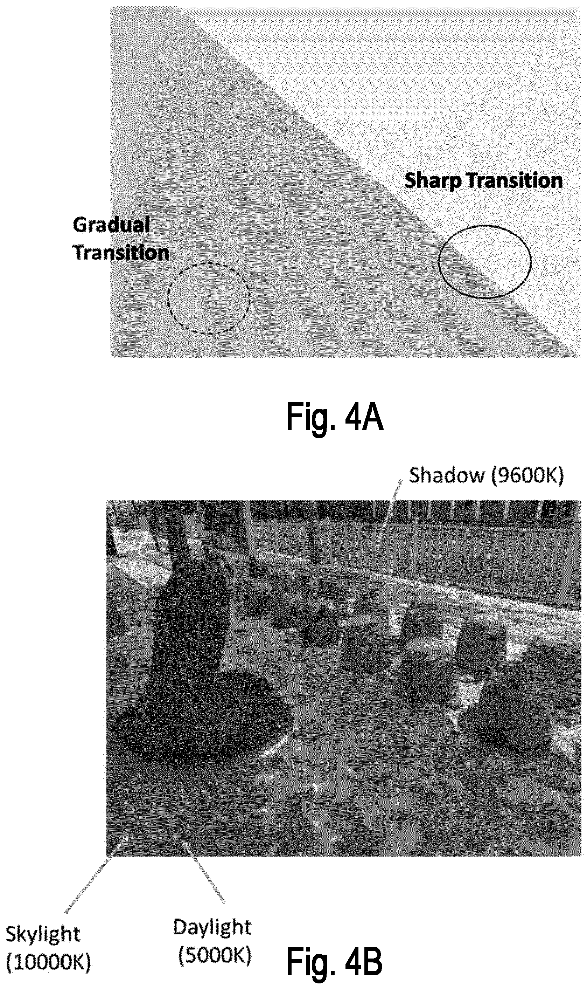

The main steps of the technique are as follows:
a) Use downscaled raw image as the input, in order to save power.
b) Run mixed illumination detection. The detector can be implemented as a separate NN or as a part of an AI based single WP AWB algorithm (e.g. re-use the CNN feature layers and have a separate fully connected NN layers for mixed illumination classification).
c) If mixed illumination was detected, then detect the ROIs of potential differently illuminated image regions. The ROI detection can be implemented as a separate NN.
d) Apply segmentation inside the ROI in order to determine the accurate boundary of the differently illuminated image region
e) Analyze the illumination inside the segmented area in order to determine the type of illumination transition (abrupt/sharp or gradual transition)
f) A high quality AWB algorithm is executed on local areas to estimate local illumination and get WPs.
   1.) For single illumination regions, a conventional high quality AWB algorithm may be used to estimate the WP on that local region. This relates to the illumination region outside the ROIs and may also relate to the are inside one or more of the ROI. For the ROIs, if there is additional information about that region (e.g. "screen" is detected by object recognition), then that information can be utilized in the illumination estimation. For example, the range of CCTs that are used in screen light sources are more limited than in case of a generic unknown scene, so a more limited range of potential light sources can be used in order to increase the robustness of AWB for that case.
   2.) For ROIs that include gradual illumination change regions, we can (optionally) utilize also learning based (e.g. CNN) spatial AWB. Compared with using CNN for full frame spatial AWB, it is easier to generate training data for this kind of limited region use case by applying synthetic illumination changes on single WP ground truth images as described in more detail with reference to figures 4A and 4B. Also, the processing time requirement is smaller since the ROI is only part of the initial image.
g) Finally, the gain map will be created based on local WPs, segmentation information and the type of illumination transitions. After applying the gain map, the image will be white balanced.

a. If it is desired to leave some of the illumination differences visible in the final image, then it is possible to modify the gain map so that e.g. frame average WP and local WP are mixed at each pixel location. Alternatively, e.g. ambient main illumination is analyzed by excluding the ROIs and then this WP is mixed with the local WPs in the ROI regions in order to leave some of the illumination difference visible (still avoiding excess color casts that result when only 1 WP is used).
b. Bilateral upscaling can be used for the gain map in order to restore full original resolution, if downscaled raw image was used as the input

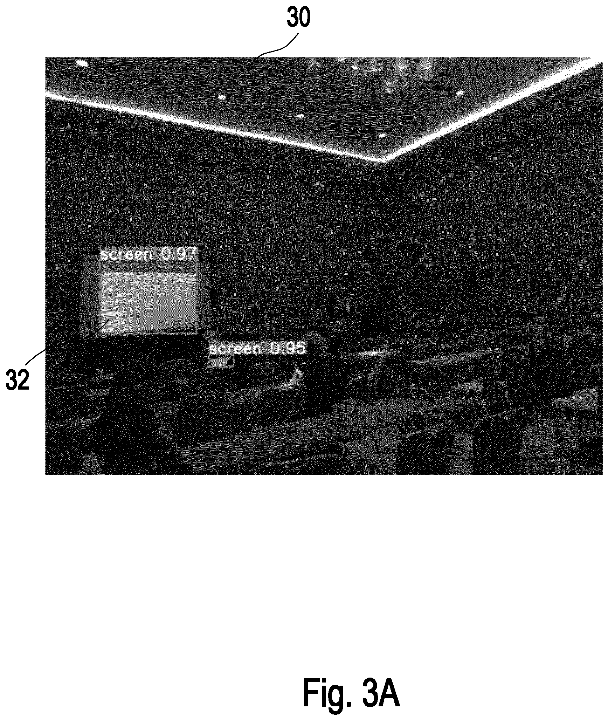

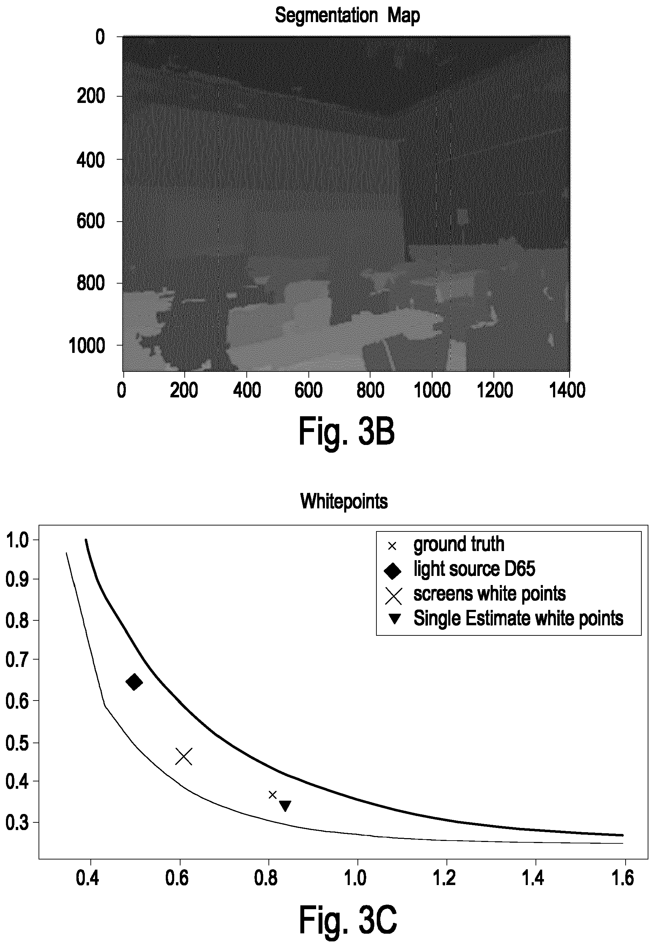

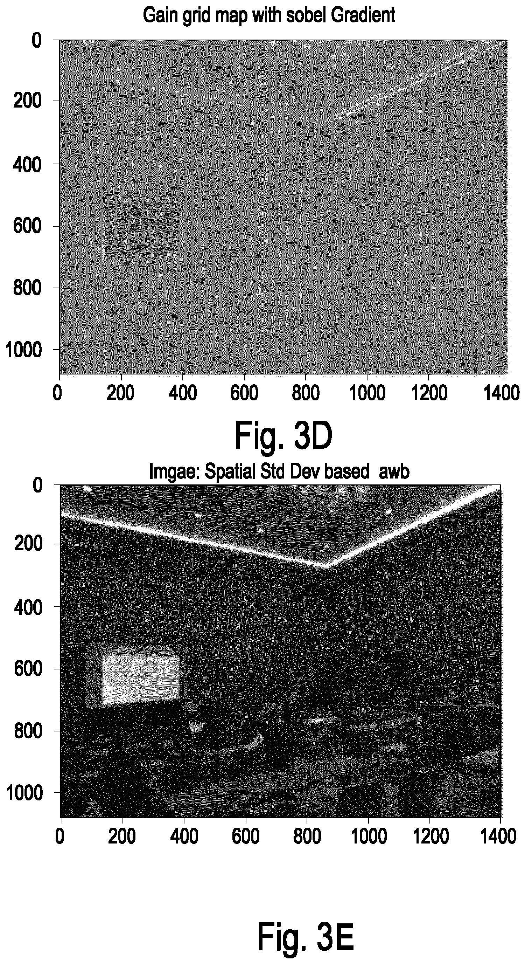

Referring to figures 3A-3E showing the steps of the method according to the present invention. Figure 3A shows the initial image 30. The initial image 30 contains two screens 32 having a different illumination, i. e. are self-illuminant. These two screens 32 are detected as ROIs for example by segmentation as shown in figure 3B. For the individual ROIs WPs are determined as shown in figure 3C ("screen white points). Therein, in the example of Figures 3A-3E one common white point for both screens 32 is determined. Further, Figure 3C shows the ground truth white point of the area outside the ROIs provided by the main light source in the image at the ceiling. For this area outside the ROIs a single WP is determined ("Single Estimate white points") which accurately fits to the ground truth of the initial image. Further, in Figure 3C the upper and lower boundaries for usual WP are indicated by the lines. These boundaries might limit the search for possible WPs. Figure 3D shows the ROIs for which the white points are determined and to which the receptive determined white points are applied. Thus, figure 3D represents a 2D WP gain map to be applied to the initial image for white-balancing. Figure 3E shows the final image wherein to the ROIs respective white-balancing is applied on the basis of the determined white points wherein the area outside the ROIs is white-balanced on the basis of the remaining illumination of the initial image, i. e. the main light source on the ceiling of the initial image. Thus, a more natural appearance of the image is achieved and the image quality is improved.

In order to detect the area or the ROIs, training data can be generated referring to figures 4A and 4B. Figure 4A shows an illumination mask including gradual transition between the areas of different illumination and a sharp transition of the illumination. The illumination mask might be applied to an initial image as shown in figure 4B having a uniform illumination (no mixed illumination) in order to create artificially training image with mixed illumination. The resulting image, as shown in Figure 4B thus has a mixed illumination by superposition of the illumination mask of Figure 4A and the original image (not shown). The figure 4B can then be used for training of a neural network in order to determine the ROIs. In particular, due to the illumination map of figure 4A, position of the ROI and the transition of the ROI in the resulting training image are known. Thereby training sets can be easily generated to train the neural network for detecting the ROIs in the image with high accuracy. Therein the present invention does not require accurate annotation of spatial white points or reliable object recognition to be able to detect the ROIs.

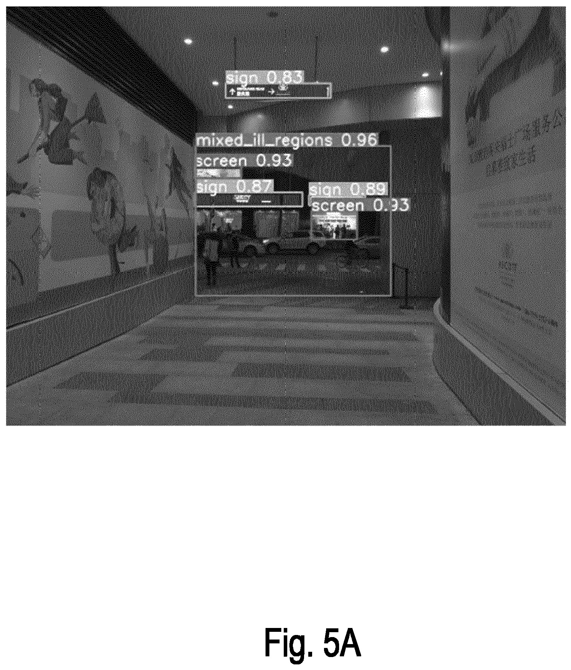

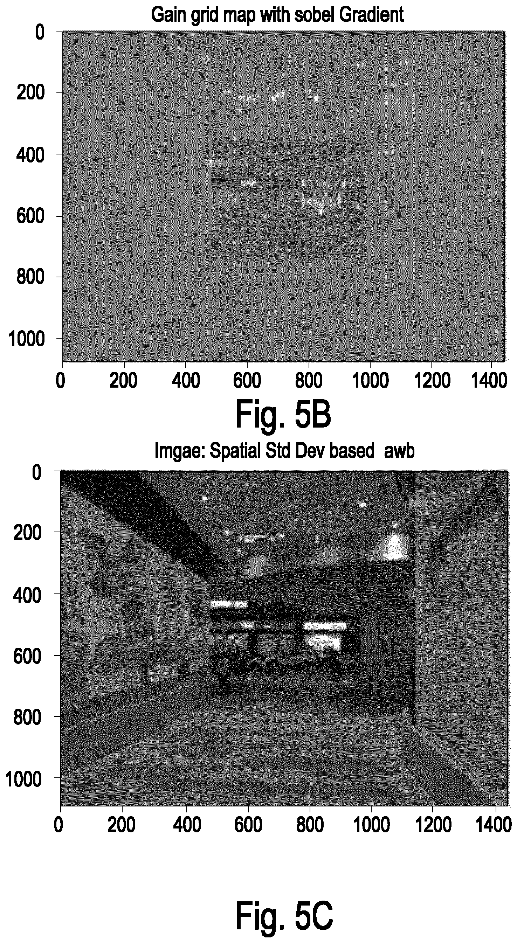

Referring to figures 5A-5C wherein sharp illumination transition is used in screen and sign areas. Gradual illumination transition is also present by the entrance of the corridor by gradually superimposing of the artificial light within the corridor and the light outside. Both, sharp and gradual illumination transition are used in general mixed illumination regions. Figure 5A shows the initial image comprising several ROI identified and for the purpose of illustration also annotated. Figure 5B shows the ROIs for which the white points are determined and to which the receptive determined white points are applied. Thus, figure 5B represents a 2D WP gain map to be applied to the initial image for white-balancing. Figure 5C shows the final image, wherein the appearance of the signs and screens as well as the transition to the outside of the corridor have a more natural appearance and color casts of these areas is avoided.

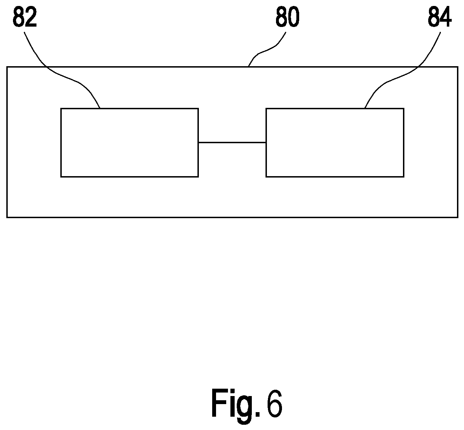

Referring to figure 6 showing a terminal according to the present invention. The terminal 80 might be a smartphone, tablet or the like. Alternatively, the terminal 80 might be a camera. The terminal 80 might include an image sensor 82 in order to acquire the initial image. Alternatively, the initial image might be transferred to the terminal 80 via a communication connection (not shown). The initial image is then transferred to a processor 84. Therein, processor 84 might be the main processor of the terminal 80. Alternatively, a dedicated processor such as an ISP might be implemented. Therein, the processor 84 is configured to carry out the steps of the method described above. In particular, more than one processor 84 might be implemented, wherein dedicated tasks are carried out by the individual processors. For example, AWB, i.e. calculation of WPs, and application of the 2D WP gain map might be applied in the ISP wherein recognition of the ROI might be carried out by a dedicated AI processor.

## Claims

1. Method for image processing implemented in a terminal including:
acquiring an initial image;
determining at least one region of interest, ROI, in the initial image;
determining at least one first correction parameter, for the at least one ROI and at least one second correction parameter for the initial image outside the ROI, wherein the correction parameter is one or more of a white point and a color correction, when the at least one ROI has a sharp transition region, one white point is determined for the at least one ROI; and when the at least one ROI has a gradual transition between the at least one ROI and the initial image outside the ROI, one or more white points are determined for the at least one ROI;
applying the first correction parameter to the ROI and the second correction parameter to the initial image outside the ROI to generate the final image.

2. Method according to claim 1, wherein the at least one ROI is determined by a first neural network, NN.

3. Method according to claim 1 or 2, wherein the at least one ROI is determined by object recognition.

4. Method according to any of claims 1 to 3, wherein the at least one ROI is determined by detecting an illumination transition region between the ROI and the area outside ROI.

5. Method according to any of claims 1 to 4, wherein before determining the at least one ROI, the initial image is downsampled and the at least one ROI is determined in the downsampled image.

6. Method according to any of claims 1 to 5, wherein before determining the at least one ROI the method includes:
detecting a mixed illumination in the initial image and if no mixed illumination is detected, determining one common correction parameter for the complete initial image.

7. Method according to claim 6, wherein the mixed illumination is detected by a second neural network, NN.

8. Method according to any of claims 1 to 7, wherein several correction parameters are determined for the at least one ROI and/or the area outside the at least one ROI, wherein a 2D-correction map is determined from the several correction parameters.

9. Method according to claim 8, wherein the 2D-correction map is upsampled before applying to the initial image.

10. Method according to any of claim 1 to 9, wherein a plurality of ROIs are determined in the initial image, wherein for each ROI at least one correction parameter is determined and/or wherein for at least two ROIs a common correction parameter is determined.

11. Method according to any of claims 1 to 10, wherein to the at least one ROI the first correction parameter and the second correction parameter is applied.

12. Terminal comprising an image sensor and a processor, wherein the processor is configured to perform the steps of the method according to any of claims 1 to 11.

13. A computer program comprising instructions which, when the program is executed by a computing device, cause the computing device to carry out the steps of the method according to any of claims 1 to 11.

14. An image signal processor, ISP, configured to perform the steps of the method according to any of claims 1 to 11.

## Patentansprüche

1. Bildverarbeitungsverfahren, implementiert in einem Endgerät, mit den Schritten:
Aufnehmen eines Ausgangsbilds;
Bestimmen mindestens eines interessierenden Bereichs, ROI, in dem Ausgangsbild;
Bestimmen mindestens eines ersten Korrekturparameters für dem mindestens einen ROI und mindestens eines zweiten Korrekturparameters für das Ausgangsbild außerhalb des ROI, wobei der Korrekturparameter ein Weißpunkt und/oder eine Farbkorrektur ist, wobei, wenn der mindestens eine ROI einen scharfen Übergangsbereich aufweist, ein Weißpunkt für den mindestens einen ROI bestimmt wird; und wobei, wenn der mindestens eine ROI einen allmählichen Übergang zwischen dem mindestens einen ROI und dem Ausgangsbild außerhalb des ROI aufweist, ein oder mehr Weißpunkte für den mindestens einen ROI bestimmt werden;
Anwenden des ersten Korrekturparameters auf den ROI und des zweiten Korrekturparameters auf das Ausgangsbild außerhalb des ROI, um das finale Bild zu erzeugen.

2. Verfahren nach Anspruch 1, bei welchem der mindestens eine ROI durch ein erstes neuronales Netzwerk, NN, bestimmt wird.

3. Verfahren nach Anspruch 1 oder 2, bei welchem der mindestens eine ROI durch Objekterkennung bestimmt wird.

4. Verfahren nach einem der Ansprüche 1 bis 3, bei welchem der mindestens eine ROI durch Erkennen eines Beleuchtungsübergangsbereichs zwischen dem ROI und dem Bereich außerhalb des ROI bestimmt wird.

5. Verfahren nach einem der Ansprüche 1 bis 4, bei welchem das Ausgangsbild vor dem Bestimmen des mindestens einen ROI heruntergerechnet wird und der mindestens eine ROI in dem heruntergerechneten Bild bestimmt wird.

6. Verfahren nach einem der Ansprüche 1 bis 5, bei welchem das Verfahren vor dem Bestimmen des mindestens einen ROI die folgenden Schritte aufweist:
Erkennen einer gemischten Beleuchtung in dem Ausgangsbild, und wenn keine gemischte Beleuchtung erkannt wird, einen gemeinsamen Korrekturparameter für das gesamte Ausgangsbild.

7. Verfahren nach Anspruch 6, bei welchem die gemischte Beleuchtung von einem zweiten neuronalen Netzwerk, NN, erkannt wird.

8. Verfahren nach einem der Ansprüche 1 bis 7, bei welchem mehrere Korrekturparameter für den mindestens einen ROI und/oder den Bereich außerhalb des mindestens einen ROI bestimmt werden, wobei eine 2D-Korrekturkarte aus den mehreren Korrekturparametern bestimmt wird.

9. Verfahren nach Anspruch 8, bei welchem die 2D-Korrekturkarte vor der Anwendung auf das Ausgangsbild hochgerechnet wird.

10. Verfahren nach einem der Ansprüche 1 bis 9, bei welchem mehrere ROI in dem Ausgangsbild bestimmt werden, wobei für jeden EOI mindestens ein Korrekturparameter bestimmt wird und/oder wobei für mindestens zwei ROI ein gemeinsamer Korrekturparameter bestimmt wird.

11. Verfahren nach einem der Ansprüche 1 bis 10, bei welchem auf den mindestens einen ROI der erste Korrekturparameter und der zweite Korrekturparameter angewendet werden.

12. Endgerät mit einem Bildsensor und einem Prozessor, bei welchem der Prozessor dazu ausgebildet ist, die Schritte des Verfahrens nach einem der Ansprüche 1 bis 11 auszuführen.

13. Computerprogramm mit Befehlen, welche, wenn das Programm von einer Rechenvorrichtung ausgeführt wird, die Rechenvorrichtung veranlassen, die Schritte des Verfahrens nach einem der Ansprüche 1 bis 11 auszuführen.

14. Bildsignalprozessor, ISP, der dazu ausgebildet ist, die Schritte des Verfahrens nach einem der Ansprüche 1 bis 11 auszuführen.

## Revendications

1. Procédé de traitement d'image mis en œuvre dans un terminal, comprenant les étapes consistant à :
acquérir une image initiale ;
déterminer au moins une région d'intérêt, dite ROI, dans l'image initiale ;
déterminer au moins un premier paramètre de correction pour l'au moins une ROI et au moins un second paramètre de correction pour l'image initiale à l'extérieur de la ROI, dans lequel le paramètre de correction correspond à un ou plusieurs d'un point blanc et d'une correction de couleur, lorsque l'au moins une ROI comporte une région de transition nette, un point blanc est déterminé pour l'au moins une ROI ; et lorsque l'au moins une ROI comporte une transition graduelle entre l'au moins une ROI et l'image initiale à l'extérieur de la ROI, un ou plusieurs points blancs sont déterminés pour l'au moins une ROI ;
appliquer le premier paramètre de correction à la ROI et le second paramètre de correction à l'image initiale à l'extérieur de la ROI pour générer l'image finale.

2. Procédé selon la revendication 1, dans lequel l'au moins une ROI est déterminée par un premier réseau de neurones, dit NN.

3. Procédé selon la revendication 1 ou la revendication 2, dans lequel l'au moins une ROI est déterminée par une reconnaissance d'objets.

4. Procédé selon l'une quelconque des revendications 1 à 3, dans lequel l'au moins une ROI est déterminée par une détection d'une région de transition d'éclairement entre la ROI et la zone à l'extérieur de la ROI.

5. Procédé selon l'une quelconque des revendications 1 à 4, dans lequel, avant de déterminer l'au moins une ROI, l'image initiale est sous-échantillonnée et l'au moins une ROI est déterminée dans l'image sous-échantillonnée.

6. Procédé selon l'une quelconque des revendications 1 à 5, dans lequel, avant de déterminer l'au moins une ROI, le procédé comprend l'étape consistant à :
détecter un éclairement mixte dans l'image initiale et si aucun éclairement mixte n'est détecté, déterminer un paramètre de correction commun pour l'image initiale complète.

7. Procédé selon la revendication 6, dans lequel l'éclairement mixte est détecté par un second réseau de neurones, dit NN.

8. Procédé selon l'une quelconque des revendications 1 à 7, dans lequel plusieurs paramètres de correction sont déterminés pour l'au moins une ROI et/ou pour la zone à l'extérieur de l'au moins une ROI, dans lequel une carte de correction 2D est déterminée à partir des plusieurs paramètres de correction.

9. Procédé selon la revendication 8, dans lequel la carte de correction 2D est sur-échantillonnée avant d'être appliquée à l'image initiale.

10. Procédé selon l'une quelconque des revendications 1 à 9, dans lequel plusieurs ROI sont déterminées dans l'image initiale, dans lequel, pour chaque ROI, au moins un paramètre de correction est déterminé et/ou dans lequel, pour au moins deux ROI, un paramètre de correction commun est déterminé.

11. Procédé selon l'une quelconque des revendications 1 à 10, dans lequel le premier paramètre de correction et le second paramètre de correction sont appliqués à l'au moins une ROI.

12. Terminal comprenant un capteur d'image et un processeur, dans lequel le processeur est configuré pour mettre en œuvre les étapes du procédé selon l'une quelconque des revendications 1 à 11.

13. Programme d'ordinateur comprenant des instructions qui, lorsque le programme est exécuté par un dispositif informatique, amènent le dispositif informatique à exécuter les étapes du procédé selon l'une quelconque des revendications 1 à 11.

14. Processeur de signal d'image, dit ISP, configuré pour mettre en œuvre les étapes du procédé selon l'une quelconque des revendications 1 à 11.
